# EUROPÄISCHE PATENTSCHRIFT

(11) **EP 2 921 669 B1**
(45) Veröffentlichungstag und Bekanntmachung des Hinweises auf die Patenterteilung: **21.12.2016**
(21) Anmeldenummer: 15155466.4
(22) Anmeldetag: 17.02.2015
(51) Int. Cl.: F01N 13/10, F01N 13/14

(54) **Abgaskrümmer für eine Abgasanlage eines Verbrennungsmotors**
Exhaust manifold for an exhaust system of a combustion engine
Collecteur de gaz d'échappement pour une installation de gaz d'échappement d'un moteur à combustion interne

(30) Priorität: 20.03.2014 DE 102014103820
(43) Veröffentlichungstag der Anmeldung: 23.09.2015
(73) Patentinhaber: Benteler Automobiltechnik GmbH, 33102 Paderborn (DE)
(72) Erfinder: Fischer, Uwe, 34454 Bad Arolsen (DE); Gockel, Tobias, 59872 Meschede (DE); Grußmann, Elmar, 33184 Altenbeken (DE); Kharwawala, Ali Asgar, 33102 Paderborn (DE)
(74) Vertreter: Griepenstroh, Jörg

(56) Entgegenhaltungen:
- EP-A1- 0 744 537
- EP-A2- 0 955 453
- WO-A1-2010/019268
- DE-A1-102009 030 014
- DE-A1-102012 203 181
- US-A1- 2002 166 720

## Beschreibung

Die Erfindung betrifft einen Abgaskrümmer für eine Abgasanlage eines Verbrennungsmotors gemäß den Merkmalen im Oberbegriff von Anspruch 1.

Ein Abgaskrümmer ist ein Bauteil der Abgasanlage von Verbrennungsmotoren. Direkt an den Motor bzw. den Zylinderkopf des Motors angeflanscht, dient der Abgaskrümmer dazu, das an den einzelnen Zylindern austretende Abgas zusammenzuführen bzw. zu sammeln und einem Abgasauslass zuzuleiten. Insoweit bildet ein Abgaskrümmer, der fachterminologisch auch als Abgassammler bezeichnet wird, den Einlassbereich einer Abgasanlage.

Durch die DE 101 02 637 A1 zählt ein Abgaskrümmer zur Abgasabführung aus einem Verbrennungsmotor mit mehr als drei in Reihe angeordneten Zylindern zum Stand der Technik. Der Abgaskrümmer hat ein Innenrohrsystem, dort als Innenschale ausgebildet, die von einer Außenschale umgeben wird, so dass zwischen Innenschale und Außenschale ein Luftspalt ausgebildet wird. Auf der Abgaseintrittsseite sind Eintrittsflansche mit Eintrittsöffnungen vorgesehen. An einem mittleren Abschnitt des Abgaskrümmers werden die über die Eintrittsflansche eingeführten Abgase auf einen gemeinsamen Austrittsflansch zusammengeführt. Der Austrittsflansch ist mit einer kreisförmigen Austrittsöffnung versehen. Zwei als Halbkreissegmente geformte Enden der Innenschale bzw. des Innenrohrsystems endet auf der Auslassseite in der kreisförmigen Austrittsöffnung. Sowohl der Endbereich der Außenschale als auch der Endbereich der Innenschale ragen aneinander liegend in die Austrittsöffnung hinein. Über eine Schweißnaht auf der Innenfläche der Austrittsöffnung ist die Innenschale und die Außenschale mit dem Austrittsflansch verbunden.

Auch durch die DE 10 2007 062 661 A1 zählt ein Abgaskrümmer bzw. Abgassammler für eine Abgasanlage eines Verbrennungsmotors zum Stand der Technik. Der Abgaskrümmer umfasst ein Innenrohrsystem aus zwei inneren Halbschalen, die jeweils mehrere Einlassöffnungen mit einer Auslassöffnung kommunizierend verbinden. Das Innenrohrsystem ist in einer Außenschale angeordnet. Der Abgaskrümmer weist einen Eintrittsflansch auf, mit dem der Abgaskrümmer am Zylinderkopf montierbar ist. Ferner weist der Abgaskrümmer einen äußeren Schalenkörper auf, der vorzugsweise aus zwei äußeren Schalen zusammengesetzt ist. Die Außenschale weist einen Auslassbereich auf, in dem Auslassabschnitte des Innenrohrsystems mit ihren Auslassöffnungen enden. Über einen Austrittsflansch wird das Abgas nachgeschalteten Abgasanlagenkomponenten, hier einem Turbolader, zugeleitet.

Die DE 44 44 760 C2 offenbart einen luftspaltisolierten Abgaskrümmer mit einem aus Rohrstücken bestehenden Innenrohrsystem und einer das Innenrohrsystem mit Abstand umgebenden Außenschale sowie einem Eintrittsflansch und einem Austrittsflansch mit einer zentralen Auslassöffnung. Am Austrittsflansch laufen das endseitige Rohrstück des Innenrohrsystems und die Außenschale zusammen und sind mit dem Austrittsflansch gefügt.

Aus der DE 102 20 986 B4 geht ein Abgaskrümmer hervor, dessen Rohrenden mit zumindest einem Flansch verbunden sind, wobei sich der Flansch aus einem Befestigungsteil mit Durchgangslöchern zur Befestigung des Flansches an ein angrenzendes Bauteil und zumindest einer Wärmedämmhülse zusammensetzt, die in einer Durchgangsöffnung des Befestigungsteils eingebracht ist. Die Wärmedämmhülse ist zwischen dem Befestigungsteil und dem Rohrende über die Eintauchlänge des Rohrendes eingefasst und so ausgebildet, dass ausgehend von den Temperaturverhältnissen im heißen Abgas der Temperaturgradient derart abnimmt, dass das Befestigungsteil nur noch mäßigen Temperaturen ausgesetzt sein soll.

Weitere Ausgestaltungen von Abgaskrümmern, welche zumindest teilweise eine in einem Abstand angeordnete Außenschale gegenüber einem Innenrohrsystem aufweisen, sind durch die US 2002/0166720 A1, die DE 10 2012 203 181 A1 sowie die EP 0 744 537 A1 bekannt.

Dünnwandig gebaute Abgaskrümmer haben den Vorteil, dass die thermische Masse und damit das Ansprechverhalten eines nachgeschalteten Katalysators nach dem Kaltstart verbessert werden kann. Weiterhin haben luftspaltisolierte Abgaskrümmer den Vorteil, dass durch die Isolierwirkung des Luftspalts die Wärmeverluste des Abgases auf dem Weg zum Katalysator verringert werden, wodurch eine schnelle Aufheizung bzw. Erreichung der Betriebstemperatur des Katalysators nach dem Motorkaltstart bewirkt wird.

Beim Aufwärmen und Abkühlen des Verbrennungsmotors und damit der Abgasanlage und insbesondere des Abgaskrümmers verändert sich die Temperatur im Abgaskrümmer lokal unterschiedlich. Demzufolge werden aufgrund der Temperaturunterschiede Bauteilbereiche des Abgaskrümmers unterschiedlich hohen Ausdehnungen und damit Zug- und/oder Druckkräften ausgesetzt. Zusätzlich kann es zu Scherbewegungen oder plastischen Verformungen kommen.

Die unmittelbar an die Einlassöffnung anschließenden Bereiche sind thermisch weniger stark belastet als der Bereich, wo die Abgaskanäle des Innenrohrsystems im Austrittsflansch zusammenlaufen, in welchem ein erhöhter Massenstrom an heißen Abgasen sowie eine Umlenkung der Abgase erfolgt. Hier besteht eine sehr hohe thermomechanische Belastung der Schnittstelle Außensystem bzw. Außenschale zum Austrittsflansch. Abhängig von der Konstruktion des Abgaskrümmers und der Anbindung zum Austrittsflansch ist es notwendig, das Außensystem auf die thermomechanischen Belastungen abzustimmen. Dies kann durch Erhöhung der Wandstärke oder Einsatz eines höherwertigen Materials erfolgen. Auch durch zusätzliche Bauteile kann die thermomechanische Robustheit an der kritischen Schnittstelle erhöht werden. Diese Maßnahmen haben jedoch zur Folge, dass der Abgaskrümmer schwerer und teurer wird.

Der Erfindung liegt ausgehend vom Stand der Technik die Aufgabe zugrunde, einen funktional verbesserten Abgaskrümmer mit reduzierter thermomechanischer Belastung zu schaffen.

Die Lösung dieser Aufgabe besteht nach der Erfindung in einem Abgaskrümmer gemäß Anspruch 1.

Vorteilhafte Ausgestaltungen und Weiterbildungen des erfindungsgemäßen Abgaskrümmers sind Gegenstand der abhängigen Ansprüche 2 bis 6.

Der Abgaskrümmer weist ein aus mehreren Rohrstücken bestehendes Innenrohrsystem auf. Die Rohrstücke und das Innenrohrsystem können auch zumindest teilweise aus Schalenbauteilen zusammengesetzt sein. Das Innenrohrsystem ist mit Abstand von einer Außenschale umgeben. Ferner besitzt der Abgaskrümmer einen Eintrittsflansch und einen Austrittsflansch. Der Austrittsflansch weist einen Halsabschnitt und einen sich daran anschließenden äußeren Flanschabschnitt auf. Die Außenschale ist mit dem Austrittsflansch gefügt. Erfindungsgemäß weist der Austrittsflansch einen inneren zur Außenschale gerichteten Schulterabschnitt auf, welcher sich vom Halsabschnitt nach außen erstreckt. Die Außenschale ist an dem Schulterabschnitt mit dem Austrittsflansch gefügt. Die erfindungsgemäße Ausgestaltung mit der Verlängerung des Austrittsflansches über den Schulterabschnitt bewirkt eine Umverteilung der thermomechanischen Belastung auf das gesamte Außensystem bzw. eine Verschiebung in thermomechanisch robuste Bereiche. Der Austrittsflansch wird bis in die thermomechanisch kritischen Bereiche verlängert. Durch entsprechende Ausgestaltung des Austrittsflansches und insbesondere seines Schulterabschnitts, sowohl hinsichtlich der Wandstärke, der Formgebung und gegebenenfalls auch der Materialauswahl, werden thermomechanische Belastungen auf unkritische Bereiche im tragenden Außensystem verschoben. Hierdurch kann die thermomechanische Robustheit des Abgaskrümmers gesteigert werden, insbesondere werden plastische Dehnungen in thermomechanisch kritischen Bereichen reduziert, wodurch die Bauteillebensdauer erheblich gesteigert werden kann. Weiterhin kann die Wanddicke der Außenschale reduziert werden. Hierdurch kann trotz einer kompakteren und gegebenenfalls schwereren Ausgestaltung des Austrittsflansches eine Gewichtsreduzierung des Abgaskrümmers insgesamt erreicht werden. Weiterhin können Bauteile bzw. Bauteilbereiche des Abgaskrümmers von der Material- bzw. Werkstoffgüte reduziert werden. Durch die erfindungsgemäß bewirkte Entschärfung von thermomechanisch kritischen Bereichen kann auch auf zusätzliche Bauteile wie Verstärkungsbleche und Ähnliches verzichtet werden.

Die mittlere Wanddicke des Schulterabschnitts ist größer als die Wanddicke der Außenschale, insbesondere größer oder gleich der doppelten Wanddicke der Außenschale.

Weiterhin ist es vorteilhaft, wenn sich der Schulterabschnitt zu seinem freien Ende hin verjüngt. Dies ist sowohl strömungsmechanisch günstig als auch hinsichtlich des Kraftfluss in Folge von thermischen Ausdehnungen vorteilhaft.

Eine praktisch vorteilhafte Ausgestaltung sieht ferner vor, dass die Außenschale auf der Außenseite des Schulterabschnitts aufliegt und mit dem Austrittsflansch gefügt ist. Dies hat herstellungstechnische Vorteile. Vorteilhaft ist diese Ausgestaltung auch für die Reduktion von thermomechanischen Spannungen.

Ein weiterer Aspekt der Erfindung sieht vor, dass der Schulterabschnitt eine in Längsrichtung der Außenschale gemessene Länge aufweist, die größer ist als seine Länge in Querrichtung. Der Außenumfang des Schulterabschnitts hat so eine annähernd oval umlaufende Kontur. Auch kann die in Längsrichtung der Außenschale gemessene Länge des Schulterabschnitts größer sein als die Länge bzw. der Durchmesser des äußeren Flanschabschnitts. Der Austrittsflansch übernimmt Verbindungs- und Dichtfunktion zu nachgeschalteten Abgaskomponenten der Abgasanlage, wie beispielsweise einem Turbolader. Die Kopplung erfolgt über den äußeren Flanschabschnitt. Der innere kranzförmig um den Halsabschnitt verlaufende Schulterabschnitt stabilisiert den Übergang. Der Schulterabschnitt übernimmt tragende Funktionen im Außensystem des Abgaskrümmers und trägt zudem die thermomechanische Belastung.

Grundsätzlich kann die Außenschale einteilig ausgeführt sein. Im Rahmen der Erfindung wird eine Außenschale als besonders vorteilhaft angesehen, die mehrteilig aus Schalenteilen zusammengesetzt ist. Insbesondere ist die Außenschale aus zumindest zwei an ihren Rändern verbundenen Schalenteilen zusammengesetzt.

Die erfindungsgemäße Ausgestaltung des Abgaskrümmers lässt hinsichtlich der Außenschale sowohl eine Verringerung der Wanddicke zu als auch den Einsatz eines kostengünstigeren Werkstoffs mit geringeren thermomechanischen Festigkeitseigenschaften. Der Austrittsflansch und auch der Eintrittsflansch können als Gussteile, insbesondere aus hitzebeständigem Edelstahlformguss hergestellt sein. Die Außenschale bzw. die Schalenteile der Außenschale können aus rostfreiem Stahl, vorzugsweise einem nicht rostenden austenitischen Stahl, insbesondere aus Chrom-Nickel-Stahl oder Chrom-Nickel-Titan-Stahl bestehen.

Die Erfindung ist nachfolgend anhand eines Ausführungsbeispiels näher beschrieben. Es zeigen:
- Figur 1: eine Ansicht auf einen erfindungsgemäßen Abgaskrümmer;
- Figur 2: einen Ausschnitt des Abgaskrümmers mit einer vergrößerten Darstellung des Austrittsflanschs;
- Figur 3: eine Explosionsdarstellung der Bauteile des Abgaskrümmers;
- Figur 4: einen Längsschnitt durch den Abgaskrümmer und
- Figur 5: einen Ausschnitt aus der Figur 4 mit einer vergrößerten Darstellung des Bereichs um den Austrittsflansch.

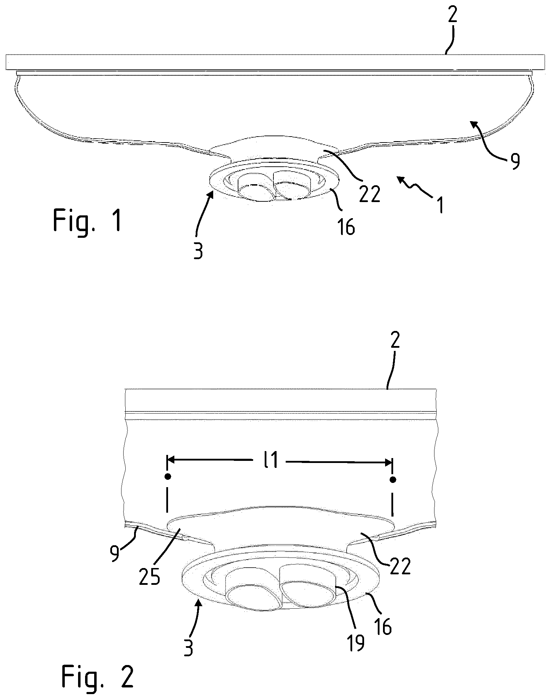

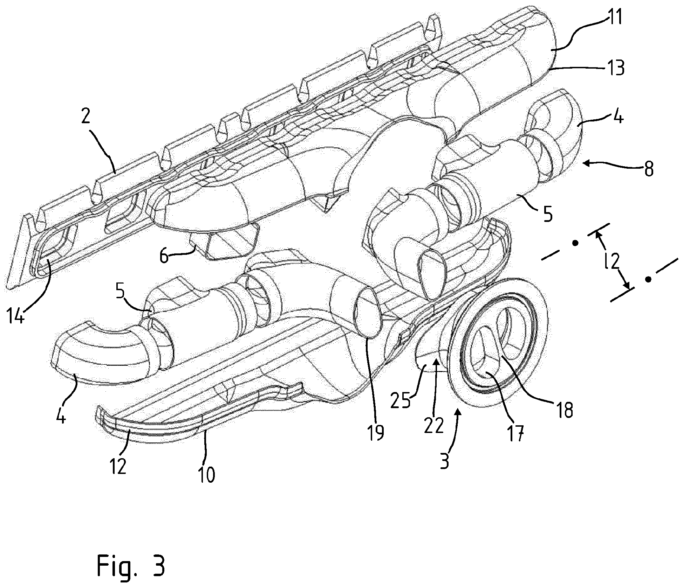

Anhand der Darstellungen der Figuren 1 bis 5 ist ein erfindungsgemäßer Abgaskrümmer 1 für eine Abgasanlage eines Verbrennungsmotors beschrieben.

Der Abgaskrümmer 1 weist einen Eintrittsflansch 2 sowie einen Austrittsflansch 3, ein aus mehreren Rohrstücken 4, 5, 6, 7 bestehendes Innenrohrsystem 8 sowie eine das Innenrohrsystem 8 mit Abstand umgebende Außenschale 9 auf. Die Außenschale 9 ist aus zwei Schalenteilen 10, 11, nämlich einer Unterschale und einer Oberschale zusammengesetzt. Die Schalenteile 10, 11 sind an ihren einander überlappenden Rändern 12, 13 miteinander verbunden, insbesondere miteinander verschweißt.

Über Eintrittsöffnungen 14 im Eintrittsflansch 2 gelangt das aus den einzelnen Zylindern des Verbrennungsmotors kommende Abgas in die Rohrstücke 4, 5, 6, 7. Über die Rohrstücke 4 bis 7 werden die Abgase gesammelt, umgelenkt und dem Austrittsflansch 3 zugeführt. Das Innenrohrsystem 8 ist zu seiner vertikalen Mittelachse symmetrisch ausgeführt. Bei den Rohrstücken 4 handelt es sich um zwei Bogenstücke. Bei den Rohrstücken 5 handelt es sich um zwei T-Stücke. Bei den Rohrstücken 6 handelt es sich um zwei Stutzenstücke und bei den Rohrstücken 7 handelt es sich um zwei Sammelrohrstücke.

Der Austrittsflansch 3 weist einen Halsabschnitt 15 und einen sich daran anschließenden äußeren Flanschabschnitt 16 auf. Über den äußeren Flanschabschnitt 16 erfolgt die Koppelung des Abgaskrümmers 1 mit nachgeschalteten Abgaskomponenten, insbesondere einer Abgasleitung oder einem Turbolader. In diesem Zusammenhang übernimmt der Flanschabschnitt 16 Verbindungs- und Dichtfunktionen. Auslassseitig sind im Austrittsflansch 3 zwei halbkreisförmige Aufnahmeöffnungen 17 vorgesehen, die durch einen Mittelsteg 18 getrennt sind. In den Aufnahmeöffnungen 17 enden die Auslassabschnitte 19 der Sammelrohrstücke 7. Die Auslassabschnitte 19 sind dabei so geformt, dass sie formschlüssig in die Aufnahmeöffnungen 17 passen. Die Auslassöffnungen 17 und der Mittelsteg 18 sind in einem scheibenförmigen Grundkörper 20 des Austrittsflanschs ausgebildet. Auf der Auslassseite erstreckt sich vom Grundkörper 20 der Flanschabschnitt 16 radial nach außen. An den Grundkörper 20 schließt sich in Richtung zur Außenschale 9 und dem Innenrohrsystem 8 der Halsabschnitt 15 an, der über einen Bogenabschnitt 21 in einen sich inneren radial nach außen erstreckenden Schulterabschnitt 22 übergeht.

Der Schulterabschnitt 22 ist umlaufend und erstreckt sich vom Halsabschnitt 15 nach außen in Richtung zur Außenschale 9. Die Außenschale 9 ist an dem Schulterabschnitt 22 mit dem Austrittsflansch 3 gefügt. Hierbei liegt die Außenschale 9 auf der Außenseite 23 des Schulterabschnitts 22 auf und ist über eine umlaufende Fügeverbindung, insbesondere eine Schweißnaht, mit dem Schulterabschnitt 22 gefügt. Man erkennt, dass der Schulterabschnitt 22 leicht geneigt in Richtung zur Außenschale 9 hin abfällt. Die Außenschale 9 läuft mit einer angepassten Kontur auf dem Schulterabschnitt 22 auf mit einem im Wesentlichen stufenlosen Übergang.

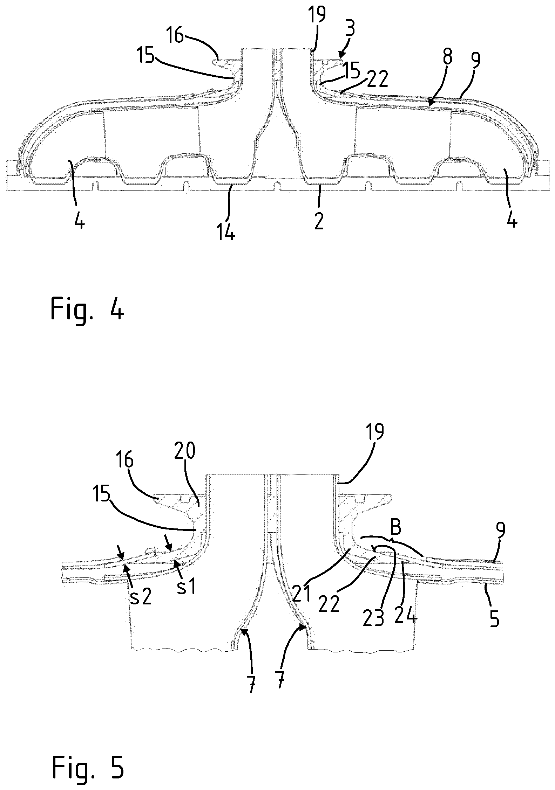

Der Schulterabschnitt 22 ist so dimensioniert, dass er sich bis in die thermomechanisch kritischen Bereiche B bzw. Zone der Außenschale 9 des Abgaskrümmers 1 erstreckt. Der Bereich B ist in der Figur 5 auf einer Seite der Außenschale 9 verdeutlicht und liegt im Bereich der Sammelrohrstücke 7, wo die Abgasströme zusammengeführt und umgelenkt werden. Es versteht sich, dass sich der Bereich B umlaufend um den Austrittsflansch 3 bzw. den Schulterabschnitt 22 erstreckt. Der Schulterabschnitt 22 endet etwa in Höhe des Übergangs vom T-Stück 5 auf das Sammelrohrstück 7, in dem die beiden Rohrstücke 5, 7 ineinandergesteckt sind.

Der Schulterabschnitt 22 ist entsprechend robust ausgeführt und trägt die thermomechanischen hohen Belastungen im thermisch kritischen Bereich B. Die mittlere Wanddicke s1 des Schulterabschnitts 22 ist größer als die Wanddicke s2 der Außenschale 9, insbesondere besitzt der Schulterabschnitt 22 eine mittlere Wanddicke s1, die größer oder gleich der doppelten Wanddicke s2 der Außenschale 9 ist. Die mittlere Wanddicke s1 ist gemessen in dem sich vom Halsabschnitt 15 radial geradlinig nach außen erstreckenden Längenabschnitt des Schulterabschnitts 22, bevor dieser sich zum freien Ende 24 hin verjüngt. Die Länge l1 des Schulterabschnitts 22 ist auf die zugewiesene Funktion der Aufnahme der thermomechanischen Belastung abgestimmt. Demzufolge erstreckt sich die Länge 11 des Schulterabschnitts 20 bis in die thermisch kritische Zone. In diesem Zusammenhang weist der Schulterabschnitt 22 einen in Längsrichtung der Außenschale 9 gemessene Länge l1 auf, die größer ist als seine Länge l2 in Quer- bzw. Vertikalrichtung. Dementsprechend besitzt der Schulterabschnitt 22 sich in Längsrichtung erstreckende Flügelbereiche 25.

Zur Reduzierung der thermomechanischen Belastung an der Schnittstelle zwischen Außenschale 9 und Austrittsflansch 3 ist der Austrittsflansch 3 bis in die thermokritischen Bereiche B verlängert. Dies erfolgt über den inneren zur Außenschale 9 gerichteten Schulterabschnitt 22, welcher sich vom Halsabschnitt 15 nach außen erstreckt.

### Bezugszeichen:

- 1 -: Abgaskrümmer
- 2 -: Eintrittsflansch
- 3 -: Austrittsflansch
- 4 -: Rohrstück
- 5 -: Rohrstück
- 6 -: Rohrstück
- 7 -: Rohrstück
- 8 -: Innenrohrsystem
- 9 -: Außenschale
- 10 -: Schalenteil
- 11 -: Schalenteil
- 12 -: Rand von 10
- 13 -: Rand von 11
- 14 -: Eintrittsöffnung in 2
- 15 -: Halsabschnitt
- 16 -: Flanschabschnitt
- 17 -: Aufnahmeöffnung
- 18 -: Mittelsteg
- 19 -: Auslassabschnitt
- 20 -: Grundkörper
- 21 -: Bogenabschnitt
- 22 -: Schulterabschnitt
- 23 -: Außenseite von 22
- 24 -: Ende von 22
- 25 -: Flügelbereich

- l1 -: Länge von 22
- l2 -: Länge von 22
- s1 -: Wanddicke von 22
- s2 -: Wanddicke von 9
- B -: Bereich

## Patentansprüche

1. Abgaskrümmer (1) für eine Abgasanlage eines Verbrennungsmotors mit einem aus mehreren Rohrstücken (4, 5, 6, 7) bestehenden Innenrohrsystem (8) und einer das Innenrohrsystem (8) mit Abstand umgebenden Außenschale (9) sowie einem Eintrittsflansch (2) und einem Austrittsflansch (3), wobei der Austrittsflansch (3) einen Halsabschnitt (15) und einen sich daran anschließenden äußeren Flanschabschnitt (16) aufweist und die Außenschale (9) mit dem Austrittsflansch (3) gefügt ist, **dadurch gekennzeichnet, dass** der Austrittsflansch (3) einen inneren zur Außenschale (9) gerichteten Schulterabschnitt (22) aufweist, welcher sich vom Halsabschnitt (15) nach außen erstreckt und die Außenschale (9) an dem Schulterabschnitt (22) mit dem Austrittsflansch (3) gefügt ist, wobei die mittlere Wanddicke (s1) des Schulterabschnitts (22) größer oder gleich der doppelten Wanddicke (s2) der Außenschale (9) ist.

2. Abgaskrümmer nach Anspruch 1, **dadurch gekennzeichnet,**
**dass** sich der Schulterabschnitt (22) zu seinem freien Ende hin verjüngt.

3. Abgaskrümmer nach einem der Ansprüche 1 oder 2,
**dadurch gekennzeichnet, dass** die Außenschale (9) auf der Außenseite (23) des Schulterabschnitts (22) auslegt und mit dem Austrittsflansch (3) gefügt ist.

4. Abgaskrümmer nach einem der Ansprüche 1 bis 3,
**dadurch gekennzeichnet, dass** der Schulterabschnitt (22) eine in Längsrichtung der Außenschale (9) gemessene Länge (l1) aufweist, die größer ist als seine Länge (l2) in Querrichtung.

5. Abgaskrümmer nach einem der Ansprüche 1 bis 4,
**dadurch gekennzeichnet, dass** die Außenschale (9) aus zumindest zwei an ihren Rändern (13, 14) verbundenen Schalenteilen zusammengesetzt ist.

## Claims

1. Exhaust manifold (1) for an exhaust system of an internal combustion engine having an internal pipe system (8) comprising a plurality of pipe sections (4, 5, 6, 7) and an outer shell (9) surrounding the internal pipe system (8) and spaced apart from it, as well as an inlet flange (2) and an outlet flange (3), wherein the outlet flange (3) has a neck section (15) and an outer flange section (16) adjoining it and the outer shell (9) is joined to the outlet flange (3), **characterised in that** the outlet flange (3) has an inner shoulder section (22) directed towards the outer shell (9) and extending outwards from the neck section (15) and the outer shell (9) at the shoulder section (22) is joined to the outlet flange (3), wherein the mean wall thickness (s1) of the shoulder section (22) is greater than or equal to double the wall thickness (s2) of the outer shell (9).

2. Exhaust manifold according to Claim 1, **characterised in that** the shoulder section (22) tapers towards its free end.

3. Exhaust manifold according to either one of Claims 1 and 2, **characterised in that** the outer shell (9) rests on the outer side (23) of the shoulder section (22) and is joined to the outlet flange (3).

4. Exhaust manifold according to any one of Claims 1 to 3, **characterised in that** the shoulder section (22) has a length (l1), measured in the longitudinal direction of the outer shell (9), which is greater than its length (l2) in the transverse direction.

5. Exhaust manifold according to any one of Claims 1 to 4, **characterised in that** the outer shell (9) is composed of at least two shell parts connected at their edges (13,14).

## Revendications

1. Collecteur de gaz d'échappement (1) pour une installation de gaz d'échappement d'un moteur à combustion interne avec un système de tuyauterie interne (8) constitué de plusieurs tronçons de tuyau (4, 5, 6, 7) et une coque externe (9) entourant à distance le système de tuyauterie interne (8) ainsi qu'une bride d'entrée (2) et une bride de sortie (3), dans lequel la bride de sortie (3) présente une section de col (15) et une section de bride externe (16) s'y raccordant et la coque externe (9) est jointe à la bride de sortie (3), **caractérisé en ce que** la bride de sortie (3) présente une section d'épaulement interne (22) tournée vers la coque externe (9), qui s'étend de la section de col (15) vers l'extérieur et la coque externe (9) est jointe sur la section d'épaulement (22) à la bride de sortie (3), dans lequel l'épaisseur de paroi moyenne (s1) de la section d'épaulement (22) est supérieure ou égale à l'épaisseur de paroi double (s2) de la coque externe (9).

2. Collecteur de gaz d'échappement selon la revendication 1, **caractérisé en ce que** la section d'épaulement (22) s'amincit vers son extrémité libre.

3. Collecteur de gaz d'échappement selon l'une quelconque des revendications 1 ou 2, **caractérisé en ce que** la coque externe (9) s'applique sur la face externe (23) de la section d'épaulement (22) et est jointe à la bride de sortie (3).

4. Collecteur de gaz d'échappement selon l'une quelconque des revendications 1 à 3, **caractérisé en ce que** la section d'épaulement (22) présente une longueur (l1) mesurée dans la direction longitudinale de la coque externe (9), qui est supérieure à sa longueur (12) dans la direction transversale.

5. Collecteur de gaz d'échappement selon l'une quelconque des revendications 1 à 4, **caractérisé en ce que** la coque externe (9) est composée d'au moins deux parties de coque reliées sur leurs bords (13, 14).
